# EUROPEAN PATENT APPLICATION

(11) **EP 1 659 380 A1**
(43) Date of publication of application: **24.05.2006**
(21) Application number: 05025224.6
(22) Date of filing: 18.11.2005
(51) Int. Cl.: G01J 3/28

(54) **Optical spectrum sensor being switchable between hayperspectral and multispectral observation**

(30) Priority: 19.11.2004 JP 2004335363
(71) Applicant: NEC TOSHIBA Space Systems, Ltd., Fuchu-shi Tokyo (JP)
(72) Inventor: Kanda, Seiji c/o NEC TOSHIBA Space Systems Ltd, Fuchu-shi Tokyo (JP); Narimatsu, Yoshito, Fuchu-shi Tokyo (JP)
(74) Representative: von Samson-Himmelstjerna, Friedrich

(57) **Abstract**

A multi-band/hyper spectrum sensor having a sight field in a longitudinal direction in the direction (i.e., CT direction) normal to the direction of flying of an artificial satellite, converts a slit image incident via a differential grating 4 on a detector 5 to a two-dimensional image having the spreading of a slit shape (i.e., (b) CT direction) and the spreading in the wavelength dispersing direction (i.e., (a) direction normal to the CT direction). To receive the two-dimensional image, a two-dimensional CCD is used as the multi-band/hyper spectrum detector 5. Light intensity data focused on the two-dimensional CCD is binning read out according to a command from the earth surface, thus taking out spatial and wavelength resolutions while changing the same.

## Description

### BACKGROUND OF THE INVENTION

This application claims benefit of Japanese Patent Application No. 2004-335363 filed on November 19, 2004, the contents of which are incorporated by the reference.

The present invention relates to multi-band/hyper spectrum sensors and, more particularly, to multi-band/hyper spectrum sensors realizing the two functions of a multi-band and a hyper spectrum sensor as a single sensor by switching the two functions capable of setting the wavelength band and observed wavelength bandwidth of output observed data according to a setting command and optimizing the quantity of observed data in correspondence to the purpose and available downlink data rate according to spatial and wavelength resolution commands.

Wavelength-variable radiometer (i.e., spectrometer) which are mounted in space aircrafts or the like, are disclosed in, for instance, Literature 1 (Japanese Patent Laid-open No. Hei05-306954A). According to this literature, spectral light spectralized with a prism or a diffraction grating is received in a uni- or two-dimensional photo-electric converting element array. The spectral direction is the uni-dimensional array direction or the direction of one of the two dimensions of the photo-electric converting element array (for instance the column direction), and the outputs of one or more photoelectric converting elements in that direction are summated. This means that by summating the outputs of the photoelectric converting elements, three wavelengths are superimposed, and by making the summated photoelectric converting elements to be variable the spectral wavelength resolution is determined. Besides, a scanning mirror is provided for causing incidence of an observation item in any given direction.

In the viewpoint of improving the quality of the spectral observation, it is of course the better the smaller are both the spatial and wavelength resolutions.

However, in a prior art design case of arranging a sensor as an apparatus by making small both the resolutions and providing the sensor output, it is impossible to satisfy the upper limit of the data transfer line capacity due to limitations imposed on the data quantity, data processing rate and data transfer rate. Therefore, it is inevitable in the design stage to determine the spectrum to be either the multi-band spectrum, in which priority is given to the spatial resolution, or the hyper spectrum, in which priority is given to the wavelength resolution. The settings of the observed wavelength, observed wavelength band number, spatial and wavelength resolutions, etc. are fixed, and no sensor has been available, which has a function of permitting free selection according to command of these settings in correspondence to the data user's observation request or data down-link restrictions.

Also, no observation sensor has been available, which permits both the multi-band and hyper spectrum observations to be made with a single hardware by switching these observations.

### SUMMARY OF THE INVENTION

The present invention has an object of providing an optical spectrum sensor, which permits both the multi-band and hyper spectrum observations to be made with a single hardware by switching the observations.

According to an aspect of the present invention, there is provided an optical spectrum sensor for detecting the spectrum of observed light, wherein the optical spectrum sensor comprises a spectrum sensor having a hyper spectrum detecting function and a multi-band spectrum detecting function, the spectrum sensor being operated by switching the hyper spectrum detecting function and the multi-band spectrum detecting function according to an external control signal.

The control signal is a command signal for setting at least one of the items of the wavelength band, the observed wavelength bandwidth and the spatial and wavelength resolutions of observed data. The spectrum sensor includes a converging optical system for converging the observed light, a focusing slit disposed at a position of convergence by the converging optical unit, a spectral element for receiving output light from the focusing slit, and a two-dimensional photoelectric converting unit for receiving the output of the spectral element. The bandwidth of the hyper spectrum is several to ten nm, and the bandwidth of the multi-band spectrum is several 10 nm. The optical spectrum sensor is disposed on an artificial satellite, and the control signal is sent out from the earth surface. The quantity of observed data is optimized in correspondence to the purpose of observation and the available downlink data rate according to the control signal. The spectral element is constituted by a differential grating and a prism or grism. The two-dimensional photoelectric converting element is a CCD, and the hyper spectrum or the multi-band spectrum is detected by binning read-out according to the control signal. The two-dimensional photo-electric converting element is a CMOS sensor array or an infrared sensor array, the hyper spectrum or the multi-band spectrum being detected by executing an integrating process on predetermined pixels according to the command signal. The integrating process is executed by an on-board computer, a circuit system or a DSP.

According to another aspect of the present invention, there is provided an optical spectrum sensor wherein spectral light obtained with a slit and a differential grating is received in a two-dimensional CCD for binning read-out or read-out as data for editing for realizing the two functions of a multi-band and a hyper spectrum sensor as a single sensor by switching the two functions, setting the wavelength band and observed wavelength bandwidth of output observed data based on a wavelength setting command, and optimizing the quantity of observed data in correspondence to the purpose and available downlink data rate according to spatial and wavelength resolution commands.

According to other aspect of the present invention, thereisprovidedamulti-band/hyperspectrumsensorwherein an optical system using a slit and a spectral device is provided with a function of permitting the editing of data binning read out or read out from a two-dimensional CCD for changing the equivalent pixel size, permitting the selection of the observed wavelength and setting of observed band number based on a command on correspondence to an observation request.

According to further aspect of the present invention, there is provided an optical spectrum sensing method for detecting spectrum of observed light by a spectrum sensor having a hyper spectrum detecting function and a multi-band spectrum detecting function, wherein the hyper spectrum detecting function and the multi-band spectrum detecting function is changed based on a command signal for setting at least one of the items of the wavelengthband, the observed wavelength bandwidth and the spatial and wavelength resolutions of observed data.

In the present invention, spectral light obtained with a slit and a differential grating is received in a two-dimensional CCD for binning read-out or read-out as data for editing, thereby realizing the two functions of a multi-band and a hyper spectrum sensor as a single sensor by switching the two functions, also it is made possible to set the wavelength band and observed wavelength bandwidth of output observed data according to a wavelength setting command, and further it is made possible to optimize the quantity of observed data in correspondence to the purpose and available downlink data rate according to spatial and wavelength resolution commands.

According to the present invention, a multi-band/hyper spectrum sensor is provided, in which an optical system using a slit and a spectral device is provided with a function of permitting the editing of data binning read out or read out from a two-dimensional CCD and thereby changing the equivalent pixel size, thereby permitting the selection of the observed wavelength and setting of observed band number according to command on correspondence to an observation request and also the meeting of the available downlink data rate with the output observed data quantity.

Other objects and features will be clarified from the following description with reference to attached drawings.

### BRIEF DESCRIPTION OF THE DRAWINGS

Fig. 1 is a schematic showing an embodiment of the optical spectrum sensor according to the present invention;
Fig. 2 shows a multi-band spectrum, which has a relatively broad bandwidth, for instance several ten nm each of about four bands (i.e., Bands 1 to 4);
Fig. 3 shows a hyper spectrum, which has a small wavelength resolution of several to ten nm, that is, has a very large number of continuous bands;
Fig. 4 is an outer view for describing the function of a differential grating in the embodiment of the present invention;
Fig. 5 is an outer view showing the direction of flying of an artificial satellite and the direction of disposition of the differential grating in the embodiment of the present invention;
Fig. 6 is a plan view showing example of the detector for detecting an optical spectrum in the embodiment of the present invention;
Fig. 7 is a plan view showing en example of multi-band spectrum imaging in the embodiment of the present invention;
Fig. 8 is a view showing an example hyper spectrum imaging in the embodiment of the present invention; and
Fig. 9 is a block diagram showing a case of an integratingprocess executedon image signal of a CMOS sensor array or an infrared sensor array in the embodiment of the present invention.

### PREFERRED EMBODIMENTS OF THE INVENTION

Preferred embodiments of the present invention will now be described with reference to the drawings.

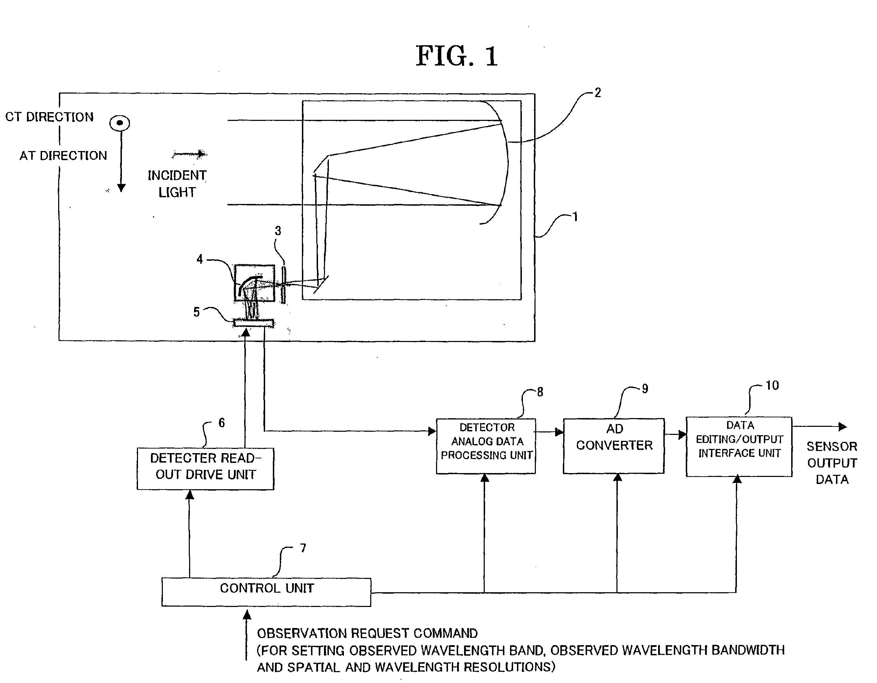

Fig. 1 is a schematic showing an embodiment of the optical spectrum sensor according to the present invention.

The optical spectrum sensor as shown comprises a sensor unit 1 and a signal processing circuit. The sensor unit 1 includes a converging optical unit 2, a focusing slit 3 and a differential grating 4 and a detector (i.e., CCD) 5.

The signal processing circuit includes a detector read-out drive unit 6, a control unit 7 for switching multi-band and hyper spectrum measurements according to observation request command (for setting observed wavelength band, observed wavelength bandwidth and spatial and wavelength resolutions), a detector analog data processing unit 8, anAD converter 9 and a data editing/output interface unit 10.

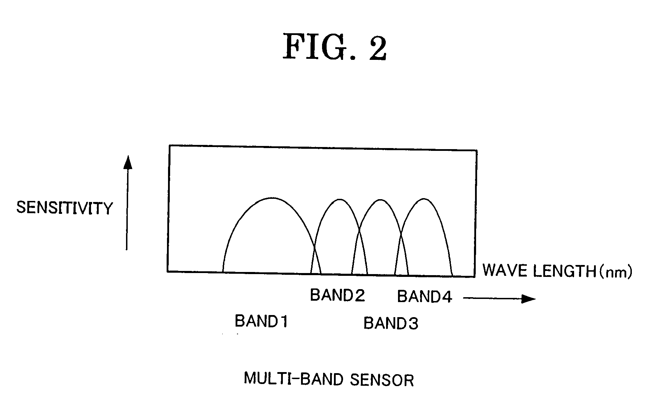

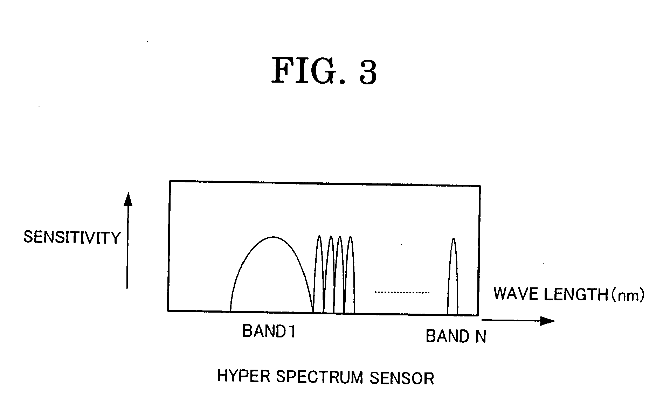

Fig. 2 shows a multi-band spectrum, which has a relatively broad bandwidth, for instance several ten nm each of about four bands (i.e., Bands 1 to 4). Fig. 3 shows a hyper spectrum, which has a small wavelength resolution of several to ten nm, that is, has a very large number of continuous bands. Therefore, this spectrum leads to a large total data quantity, while detailed wavelength data is obtainable by outputting data of individual wavelengths.

Referring to Fig. 1, reflection of the solar light by the earth surface is coupled as incident light to the converging optical unit 2 mounted in the sensor unit 1. The converting optical unit 2 may be either reflective or refractive system. The unit 2 serves as focusing optical system to converge the incident light on the focusing slit 3. The light having passed through the focusing slit 2 is incident on the differential grating 4 and then on the detector 5.

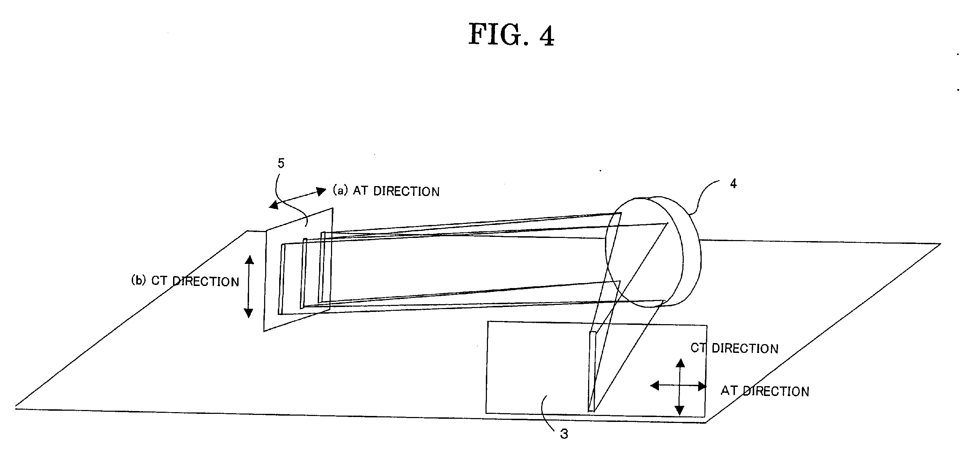

The differential grating will now be described with reference to Fig. 4.

Light from the converging optical unit 2 is focused on the focusing slit 3, which is elongate in shape in CT (cross track) direction. The light having passed through the slit 3 is incident on the differential grating 4. The differential grating 4 has an effect of changing the emission of the reflected light according to the wavelength. The light emitted from the differential grating 4 to the detector 5 is dispersed in direction (a) (i.e., AT (along-track) direction).

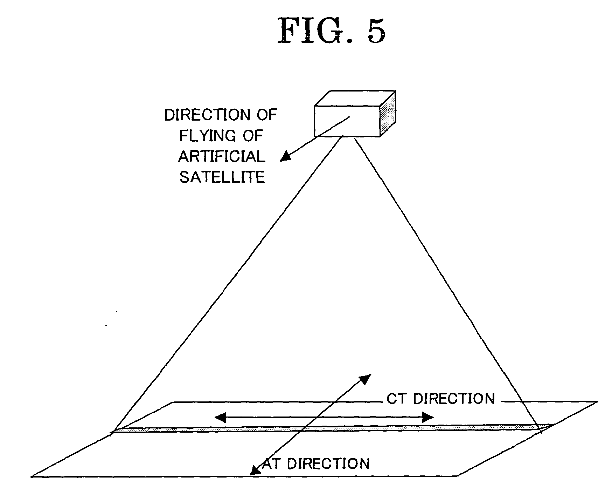

The CT and AT directions will now be described with reference to Fig. 5. As shown in the Figure, a multi-band/hyper spectrum sensor, which has a sight field in longitudinal direction normal to the direction of flying of an artificial satellite, is observing the earth in a strip-like form.

Referring to Fig. 4 again, the image of the slit 3 incident via the differential grating 4 on the detector 5 becomes, in the detecting surface, a two-dimensional image having a slit shape spreading (a) and spreading (b) in the wavelength dispersion direction. In this embodiment, for receiving this two-dimensional image a two-dimensional CCD is used as the detector 5.

The wavelength coverage of the multi-band/hyper spectrum sensor is determined absolutely by the design of the differential grating 4 and the disposition of the detector 5.

Light intensity data focused on the detector 5 (i.e., two-dimensional CCD) is taken out with the wavelength and spatial resolution changed by pixel binning read-out in the spatial and wavelength directions. The pixel binning read-out from the two-dimensional CCD is a method of collective charge read-out in the longitudinal and transversal directions in a transfer operation of reading out each pixel data received in the two-dimensional CCD, that is, a method in which signals of several longitudinal and transversal pixels are added together to provide output which is equivalently just like an output of a single pixel.

The pixel binning read-out can be realized without need of greatly changing the hardware by feeding the drive signal to the two-dimensional CCD in correspondence to the read-out content. The pixel binning bread-out permits changing the longitudinal and transversal overlap pixel numbers according to the manner of feeding the drive signal. The pixel binning read-out permits changing the equivalent two-dimensional CCD pixel sizes in the longitudinal and transversal directions and freely selecting the spatial and wavelength resolutions, wavelength bandwidth and observed wavelength band.

As shown in Fig. 1, the control unit 7 receives request command concerning observation of such items as spatial and wavelength resolutions, wavelength band and wavelength bandwidth, and sends out control signal to the detector read-out drive unit 6. The detector read-out drive unit 6 outputs a drive signal necessary for data read-out from the detector 5. The output of each pixel is inputted to the data analog processing unit 8 and then to the A/D converting unit 9, and is outputted as sensor output data from the data editing/output interface unit 10.

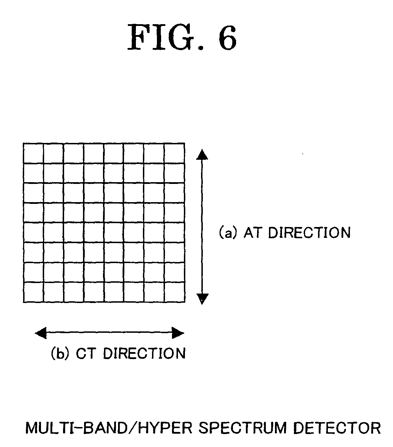

Fig. 6 shows an example of the detector 5. Each square in the Figure represents one pixel. The Figure shows an example of the numbers of the longitudinally and transversally disposed pixels, and these numbers are set according to the request of the spatial and wavelength resolutions. To show the spreading of the two-dimensional image on the detector as described before in connection with Fig. 4, in Fig. 6 (a) spectral resolution direction (AT direction) and (b) spatial resolution direction (CT direction) are indicated by arrows.

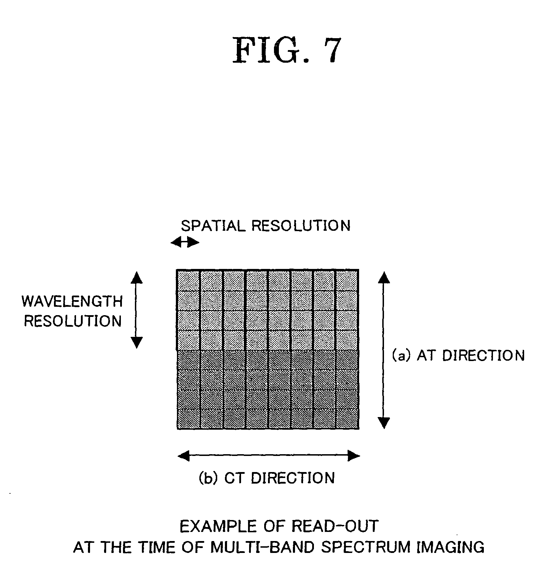

Fig. 7 shows an example of the read-out at the time ofmulti-bandspectrumimaging. In the multi-band spectrum imaging, it is required to make the spatial resolution coarse and the wavelength resolution small. In the case of Fig. 7, every four pixels in the spatial resolution direction are grouped together for processing to make the resolution coarser.

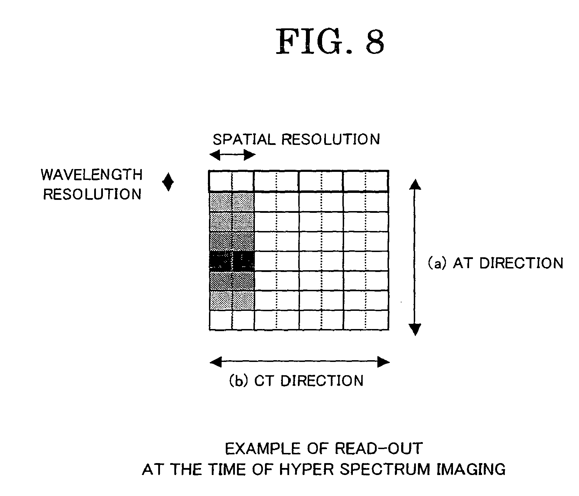

Fig. 8 shows an example of the read-out at the time of hyper spectrum imaging. In this case, the spatial resolution is made coarse, while the wavelength resolution is made small. In this case, the resolution of the two-dimensional array itself is used as wavelength resolution, and for the spatial resolution two pixels are grouped together to a single pixel.

The embodiment as described above has adopted a method of optimizing the data output quantity with the spatial and wavelength resolutions of the data output changed by using the binning read-out as method at the time of the read-out from the two-dimensional CCD. However, this method is by no means limitative; for example it is possible to use a prism or a grism in lieu of the differential grating 4.

Also, in the next stage of the sensor output it is possible to realize the same function by executing a circuit system integrating editing process for matching the data quantity to the managing line conditions. In this case, It is possible to use as detector any two-dimensional detector such as a CMOS sensor array, an infrared sensor array, etc. as well as the two-dimensional CCD permitting the binning read-out.

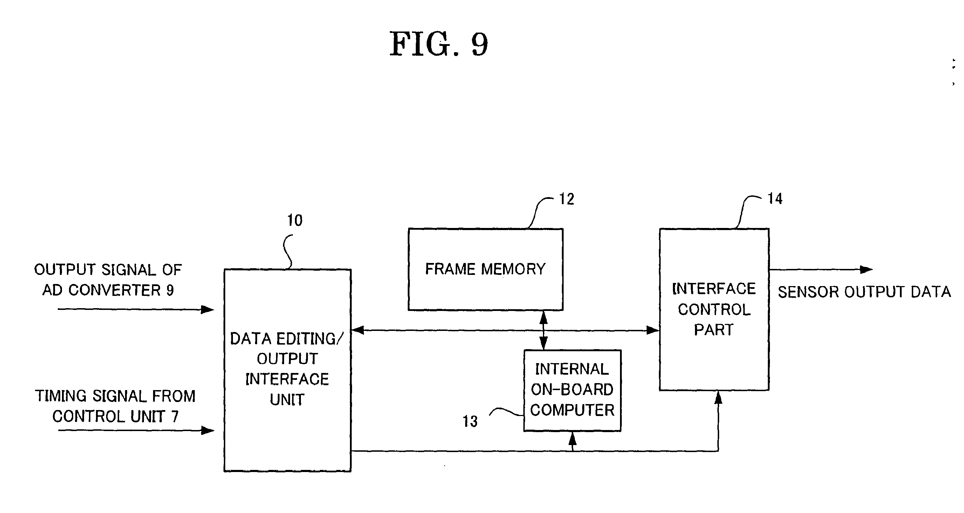

Now, the circuit system integrating editing process will be described with reference to Figs. 1 and 9.

As has been described before in connection with Fig. 1, the multi-band/hyper spectrum detector 5 generates a two-dimensional image in the slit longitudinal direction (i.e., CT direction) and wavelength dispersion detection (AT direction). In the circuit system integrating editing process, a method of practice is shown, in which no binning is executed with respect to the multi-band/hyper spectrum detector (i.e., such two-dimensional sensor as CMOS sensor array or infrared sensor array. The data read out from the two-dimensional array sensor is subjected to such necessary processes as in the detector analog processing unit 8 and the A/D converting unit 9, and then inputted to the data editing/output interface unit 10. The units 8 to 10 are either arranged independently of the tow-dimensional array sensor or providing their functions as integral units inside the two-dimensional sensor device.

In the data editing/output interface unit 10, an integrating editing process by the same circuit system is executed, thus permitting realization of a multi-band/hyper spectrum integral sensor having the features of the present invention as described above.

Referring to Fig. 9, signals each corresponding to the received light intensity of each pixel are outputted from the two-dimensional sensor, then A/D converted and inputted as digital data to the data editing/output interface unit 10, and then written in memory addresses each corresponding to each pixel of the frame memory 12.

As for the spatial and wavelength resolutions, observed wavelength band, and observed wavelength bandwidth, commands are received from the earth surface, and an internal on-board computer 13 edits the output of the two-dimensional area sensor on the frame memory according to the setting of the command by integrating (i.e., adding together) in the spatial and wavelength directions. The edited data is coupled through the interface control part 14 to be outputted as sensor output data. For practice, it is possible to use circuit system, DSP, etc. in lieu of the on-board computer.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing descriptionbe regarded asillustrativerather than limiting.

## Claims

1. An optical spectrum sensor for detecting the spectrum of observed light, wherein the optical spectrum sensor comprises a spectrum sensor having a hyper spectrum detecting function and a multi-band spectrum detecting function, the spectrum sensor being operated by switching the hyper spectrum detecting function and the multi-band spectrum detecting function according to an external control signal.

2. The optical spectrum sensor according to claim 12, wherein the control signal is a command signal for setting at least one of the items of the wavelength band, the observed wavelength bandwidth and the spatial and wavelength resolutions of observed data.

3. The optical spectrum sensor according to one of claims 1 and 2, wherein the spectrum sensor includes a converging optical system for converging the observed light, a focusing slit disposed at a position of convergence by the converging optical unit, a spectral element for receiving output light from the focusing slit, and a two-dimensional photoelectric converting unit for receiving the output of the spectral element.

4. The optical spectrum sensor according to one of claims 1 to 3, wherein the bandwidth of the hyper spectrum is several to ten nm, and the bandwidth of the multi-band spectrum is several 10 nm.

5. The optical spectrum sensor according to one of claims 1 to 4, wherein the optical spectrum sensor is disposed on an artificial satellite, and the control signal is sent out from the earth surface.

6. The optical spectrum sensor according to claim 5, wherein the quantity of observed data is optimized in correspondence to the purpose of observation and the available downlink data rate according to the control signal.

7. The optical spectrum sensor according to claim 3, wherein the spectral element is constituted by a differential grating and a prism or grism.

8. The optical spectrum sensor according to one of clams 1 to 7, wherein the two-dimensional photoelectric converting element is a CCD, and the hyper spectrum or the multi-band spectrum is detected by binning read-out according to the control signal.

9. The optical spectrum sensor according to one of claims 1 to 7, wherein the two-dimensional photo-electric converting element is a CMOS sensor array or an infrared sensor array, the hyper spectrum or the multi-band spectrum being detected by executing an integrating process on predetermined pixels according to the command signal.

10. The optical spectrum sensor according to claim 9, wherein the integrating process isexecutedbyanon-board computer, a circuit system or a DSP.

11. An optical spectrum sensor wherein spectral light obtained with a slit and a differential grating is received in a two-dimensional CCD for binning read-out or read-out as data for editing for realizing the two functions of a multi-band and a hyper spectrum sensor as a single sensor by switching the two functions, setting the wavelength band and observed wavelength bandwidth of output observed data based on a wavelength setting command, and optimizing the quantity of observed data in correspondence to the purpose and available downlink data rate according to spatial and wavelength resolution commands.

12. A multi-band/hyper spectrum sensor wherein an optical systemusing a slit and a spectral device is provided with a function of permitting the editing of data binning read out or read out from a two-dimensional CCD for changing the equivalent pixel size, permitting the selection of the observed wavelength and setting of observed band number based on a command on correspondence to an observation request.

13. An optical spectrum sensingmethod for detecting spectrum of observed light by a spectrum sensor having a hyper spectrum detecting function and a multi-band spectrum detecting function, wherein the hyper spectrum detecting function and the multi-band spectrum detecting function is changed based on a command signal for setting at least one of the items of the wavelength band, the observed wavelength bandwidth and the spatial and wavelength resolutions of observed data.
